# EUROPEAN PATENT APPLICATION

(11) **EP 1 571 751 A1**
(43) Date of publication of application: **07.09.2005**
(21) Application number: 05004707.5
(22) Date of filing: 03.03.2005
(51) Int. Cl.: H02K 7/116, H02K 9/19, B60K 6/04

(54) **Vehicle drive device and four-wheel drive with motor**

(30) Priority: 03.03.2004 JP 2004058560
(71) Applicant: Hitachi, Ltd., Tokyo 100-8280 (JP)
(72) Inventor: Shimizu, Hisaya Hitachi, Ltd., Chiyoda-ku Tokyo 100-8220 (JP); Sekiguchi, Hideki Hitachi, Ltd., Chiyoda-ku Tokyo 100-8220 (JP); Miyamoto, Shogo Hitachi, Ltd., Chiyoda-ku Tokyo 100-8220 (JP); Yamamoto, Tatsuyuki Hitachi, Ltd., Chiyoda-ku Tokyo 100-8220 (JP); Hamai, Kyugo Hitachi, Ltd., Chiyoda-ku Tokyo 100-8220 (JP)
(74) Representative: Beetz & Partner

(57) **Abstract**

The invention relates to a vehicle drive device comprising a motor (1) for driving wheels, an inverter (2) for driving the motor (1), a rotational position sensor (1a) for detecting rotation of the motor (1), a gear mechanism (3) for transmitting an output of the motor (1) to wheels (22R, 22L), an oil pump (5) for circulating oil, and cases (7, 8, 9) housing the motor (1), inverter (2), rotational position sensor (1a), gear mechanism (3), and oil pump (5). The motor (1), inverter (2), rotational position sensor (1a) gear mechanism (3), oil pump (5) and cases (7, 8, 9) are formed as an integral structure.

## Description

### CLAIM OF PRIORITY

The present application claims priority from Japanese application serial no. 2004-58560, filed on March 3, 2004, the content of which is hereby incorporated by reference into this application.

### BACKGROUND OF THE INVENTION

The present invention relates to a vehicle drive device with a motor, and a four-wheel drive electric vehicle using such a vehicle drive device. The invention particularly relates to a vehicle drive device suitable for use in a four-wheel drive vehicle where an internal combustion engine drives one of front wheels and rear wheels while a motor drives the other of the front and rear wheels, and to a four-wheel drive electric vehicle using such a vehicle drive device.

Conventionally, in a vehicle drive device using a motor, it has been required to cool the motor as well as an inverter including a plurality of power semiconductor devices for converting a DC voltage from a battery into an AC voltage, and supplying the AC voltage to the motor. There is known an arrangement meeting this requirement, where a passage of cooling water is disposed between a motor and a controller including an inverter so as to cool the motor and the controller at once by using cooling water of an internal combustion engine, as disclosed in JP-A-7-99750, for instance.

However, in an automotive vehicle where an internal combustion engine drives one of front wheels and rear wheels while a motor drives the other of the front and rear wheels, such as in a four-wheel drive electric vehicle, in a case where the internal combustion engine is disposed on a side of front wheels, there is the following problem. That is, coolant piping should be designed to extend rearwards from a front side of the vehicle, to cool a motor and an inverter that are disposed on a side of rear wheels, thereby making the piping too long. Thus the conventional arrangement is unpractical for such a vehicle. Meanwhile, it is possible to dispose only the inverter in the vicinity of the engine, so as to cool the inverter by the cooling water of the engine. However, a large distance between the motor and inverter necessitates a harness layout to be greatly extended, leading to a problem of high harness loss during a large amount of current flows.

On the other hand, there is also known an arrangement where the motor and inverter are unified, and oil is circulated in a cooling chamber of the inverter as well as interior of the motor, to cool a housing and a rotor of the motor utilizing a centrifugal force of the motor rotor, as disclosed in JP-A-7-288950, for instance. According to this method, the problem encountered in the arrangement where the motor and inverter are cooled using the cooling water of the engine, as described above, is solved.

According to the arrangement described in JP-A-7-288950, however, internal components of the motor need to be formed of materials having oil resistance, and it is required to prepare a hollow shaft and provide a jet nozzle, pushing up the cost.

### SUMMARY OF THE INVENTION

An object of the invention is to provide a vehicle drive device, which is capable of efficiently cooling a motor and an inverter, and inexpensive as well, and a four-wheel drive electric vehicle using such a vehicle drive device.

### [Means for Solving the Problem]

(1) To attain the object, the invention may provide a vehicle drive device, comprising: a motor for driving wheels of the vehicle; an inverter for driving the motor; a rotational position sensor for detecting a rotational position of the motor; a gear mechanism for transmitting power from the motor to the wheels; oil circulation means which is driven by the motor to circulate oil; and/or cases which house respectively the motor, the inverter, the rotational position sensor, the gear mechanism, and/or the oil circulation means. The motor, the inverter, the rotational position sensor, the gear mechanism, the oil circulation means, and/or the cases for them are combined into an assembly.
   The arrangement enables to efficiently cool the motor and the inverter while reducing the cost.
(2) In the drive device of (1), it is preferable that the lubricating oil for the gear mechanism is also supplied to the interior of the case for the motor and the inverter by the oil circulation means, so as to cool the inverter and the motor as well as the gear mechanism.
(3) In the drive device of (1), it is preferable that the oil circulation means operates to cool the motor and the inverter at the same time, and then cool the gear mechanism and a differential gear mechanism which are disposed downstream of the motor and the inverter.
(4) In the drive device of (1), it is preferable that a differential gear, which is used to cope with a speed difference between an inner wheel and an outer wheel which occurs when the vehicle turns, is also unified with the cases.
(5) In the drive device of (1), it is preferable that a clutch is disposed between the motor and the wheels driven by the motor, and is let in and let out to permit and inhibit transmission of power from the motor to the wheel.
(6) In the drive device of (1), it is preferable that an inverter driver circuit for driving the inverter is incorporated in the inverter.
(7) In the drive device of (1), it is preferable that the cases which house respectively the motor, the inverter, and the rotational position sensor are combined into a unified case.
(8) To attain the object, the invention may also provide a four-wheel drive vehicle having an internal combustion engine for driving one of front wheels and/or rear wheels, and a motor for driving the other of the front wheels and/or the rear wheels, the vehicle comprising: an inverter for driving the motor; a rotational position sensor for detecting a rotational position of the motor; a gear mechanism for transmitting power from the motor to the wheels; oil circulation means which is driven by the motor to circulate oil; and/or cases which house respectively the motor, the inverter, the rotational position sensor, the gear mechanism, the oil circulation means, and/or the oil. And the motor, the inverter, the rotational position sensor, the gear mechanism, the oil circulation means, and/or the case for them are combined into an assembly.
   The arrangement enables to efficiently cool the motor and the inverter while reducing the cost.
(9) To attain the object, the invention may further provide an electrical machine system integrally mounted on a unit having a differential gear mechanism for transmitting a driving force to a drive axle of wheels and/or a reduction gear mechanism for transmitting the driving force to the differential gear mechanism, and a lubricant is circulated into the differential gear mechanism and the reduction gear mechanism, the electrical machine system comprising: a motor for generating the driving force transmitted to the reduction gear mechanism; and/or a power converter for controlling electric power supplied to the motor to control the motor driving force. A cooling passage through which a coolant is circulated is formed in a motor case and/or a power converter case. The lubricant circulated to the differential gear mechanism and/or the reduction gear mechanism is supplied to the cooling passage as a coolant. The motor and/or the power converter are cooled by the lubricant circulated through the cooling passage.
   The arrangement enables to efficiently cool the motor and the inverter while reducing the cost.
(10) In the electrical machine system of (9), the cooling passage in the motor case and the converter case is positioned upstream of the differential gear mechanism and the reduction gear mechanism with respect to the lubricant flow.
(11) In the electrical machine system of (9), it is preferable that the cooling passage is supplied with the lubricant from a lubricant circulation means driven by the motor.
(12) To attain the object, the invention may still further provide an electrical machine system for a four-wheel drive vehicle, which is mounted on a four-wheel drive vehicle where an internal combustion engine drives one of a front wheel drive axle and/or a rear wheel drive axle, and/or electric power drives the other of the drive axles. Furthermore the electrical machine system is integrally mounted on a unit having a differential gear mechanism for transmitting a driving force to the other of the drive axles and/or a reduction gear mechanism for transmitting the driving force to the differential gear mechanism while reducing its speed. A lubricant is circulated into the differential gear mechanism and/or the reduction gear mechanism. The electrical machine system comprises a motor for generating the driving force transmitted to the reduction gear mechanism; and/or a power converter for controlling electric power supplied to the motor to control the motor driving force. Wherein, a cooling passage through which a coolant is circulated is formed in a motor case and/or a power converter case. The lubricant circulated to the differential gear mechanism and/or the reduction gear mechanism is supplied to the cooling passage as a coolant. The motor and/or the power converter are cooled by the lubricant circulated through the cooling passage.
   The arrangement enables to efficiently cool the motor and the inverter while reducing the cost.
(13) In the electrical machine system for a four-wheel drive vehicle of (12), the cooling passage in the motor case and the converter case is positioned upstream of the differential gear mechanism and the reduction gear mechanism with respect to the lubricant flow.
(14) In the electrical machine system for a four-wheel drive vehicle of (12), it is preferable that the cooling passage is supplied with the lubricant from a circulation means driven by the motor.
(15) The electrical machine system for a four-wheel drive vehicle of (12) preferably further comprises a generator driven by the internal combustion engine. The generator is for exclusively generating power for driving the motor, and electrically connected to an input of the power converter.
(16) To attain the object, the invention may further provide an electrical machine system for a four-wheel drive vehicle, which is mounted on a four-wheel drive vehicle where an internal combustion engine drives one of a front wheel drive axle and/or a rear wheel drive axle, and/or electric power drives the other of the drive axles. Furthermore the electrical machine system comprises a differential gear mechanism for transmitting a driving force to the other of the drive axles; a reduction gear mechanism for transmitting the driving force to the differential gear mechanism while reducing its speed; a motor for generating the driving force transmitted to the reduction gear mechanism; and/or a power converter for controlling electric power supplied to the motor to control the motor driving force. The differential gear mechanism, the reduction gear mechanism, the motor, and/or the power converter are combined to be a single unit in a unified case. A lubricant is circulated to the differential mechanism and the reduction gear mechanism. A cooling passage through which a coolant is circulated is formed in a motor case and/or a power converter case. The lubricant circulated to the differential gear mechanism and/or the reduction gear mechanism is supplied to the cooling passage as a coolant, and/or the motor and the power converter are cooled by the lubricant circulated through the cooling passage.
   The arrangement enables to efficiently cool the motor and the inverter while reducing the cost.
(17) In the electrical machine system for a four-wheel drive vehicle of (16), it is preferable that the cooling passage is supplied with the lubricant before the lubricant is circulated around the differential gear mechanism and the reduction gear mechanism.
(18) In the electrical machine system for a four-wheel drive vehicle of (16), it is preferable that the unit includes a circulation means for circulating the lubricant by a driving force of the motor, and the cooling passage is supplied with the lubricant from the circulation means.
(19) In the electrical machine system for a four-wheel drive vehicle of (16), it is preferable that the cooling passage is formed in the case, which constitutes a motor casing and a power converter casing. And the motor and the power converter are disposed side by side putting the cooling passage between them so as to share the cooling passage.
(20) The electrical machine system for a four-wheel drive vehicle of (16) preferably further comprises a generator driven by the internal combustion engine. The generator is for exclusively generating power for driving the motor, and electrically connected to an input of the power converter.
   According to the invention, the motor and the inverter are efficiently cooled, while reducing the cost of the vehicle drive device and the four-wheel drive electric vehicle using the drive device.

### BRIEF DESCRIPTION OF THE DRAWINGS

Fig. 1 is a cross-sectional view showing a structure of a vehicle drive device according to one embodiment of the invention.
Fig. 2 is a cross-sectional view of a relevant part of a structure of a modification of the vehicle drive device of the embodiment.
Fig . 3 is a view of a structural model illustrating a circuit of cooling oil in the vehicle drive device of the embodiment.
Fig. 4 is a view showing a structure of a system of a four-wheel drive vehicle where the vehicle drive device of the embodiment is applied.
Fig. 5 is a flowchart illustrating details of a control in the vehicle drive device of the embodiment.

### DETAILED DESCRIPTION OF THE INVENTION

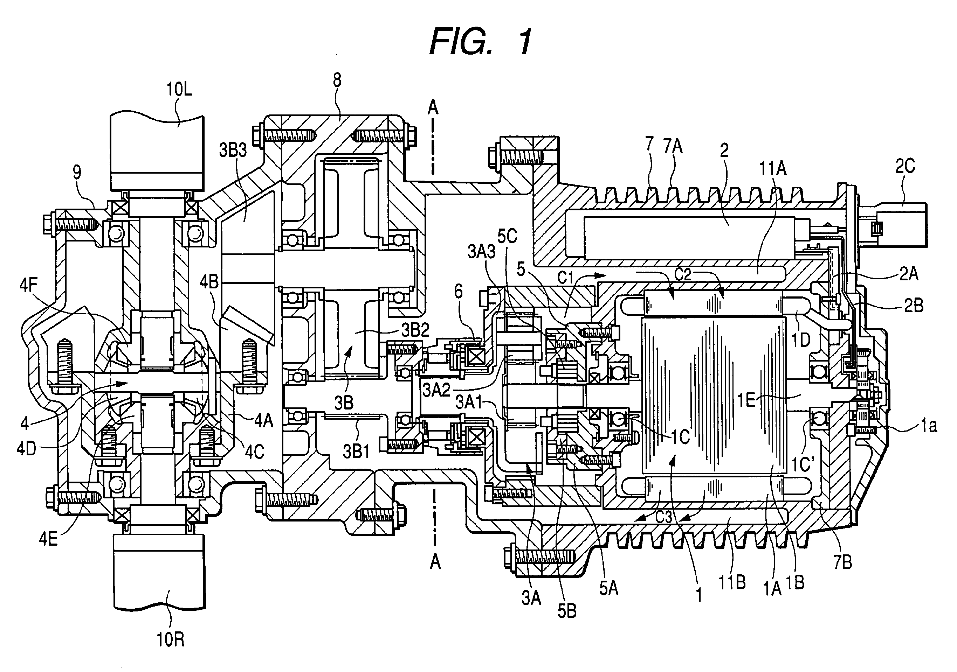

A structure of a vehicle drive device according to one embodiment of the present invention will be described, by referring to Figs. 1 through 5.

To begin with, an overall structure of the vehicle drive device of the embodiment will be described by referring to Fig. 1.

Fig. 1 is a cross sectional view showing the structure of the vehicle drive device according to the embodiment of the invention. In Fig. 1, the left side of a dashed line A-A shows a horizontal section as taken parallel to the ground surface, while the right side of the dashed line A-A shows a vertical section as taken perpendicularly to the ground surface. That is, drive shafts 10 shown on the left side of the line A-A are parallel to the ground surface, and an inverter 2 shown on the right side of the line A-A is disposed over a motor 1.

In the embodiment, the motor 1, a rotational position sensor 1a for motor, an inverter 2, a reduction gear 3, a differential gear 4, an oil pump 5, and a clutch 6 are integrally housed in a motor-inverter case 7, a reduction gear case 8, and a differential case 9 which are combined into unified structure.

The motor 1 comprises an armature 1A as a stator, and a field pole core 1B as a rotor which is rotatably held by bearings 1C, 1C' inside the armature 1A. The armature 1A has armature windings 1 corresponding to three phases, namely U phase, V phase, and W phase. The armature 1A is fixed on an inner surface of the case 7. The bearing 1C is attached to an inner surface of a side wall of the case 7, while the bearing 1C' is attached to a front bracket 7B fixed to the case 7. A shaft 1E of the field pole core 1B is rotatably held by the bearings 1C, 1C'. A rotational position sensor 1a is attached to an end portion of the shaft 1E on the right side of the drawing, in order to detect a rotational position of the motor 1.

There is a space for housing the inverter 2 in an upper portion of the motor-inverter case 7. The inverter 2 is fixedly held in this space. The inverter 2 incorporates a motor controller for driving the motor 1, and converts DC power supplied from an external battery through a connector 2C, into AC power. The obtained AC power is supplied to the armature coil (winding) 1D of the motor 1 via a wiring board 2A, to turn the field pole 1B. The turning power on the field pole 1B is outputted as a driving force of the motor 1 through the shaft 1E. The wiring board 2A includes an insulating material in which three bus bars of copper are integrally formed corresponding to the U, V, and W phases. The output of the rotational position sensor 1a representative of the detected rotational position is inputted into a motor control unit disposed in the inverter 2 through a wiring 2B.

As the motor 1, a synchronous motor where the armature and the field pole area stator and a rotor, respectively, is employed, for example. This is because voltage and current applied to an armature winding of the motor are to be set high, and power consumption thereof is also made high, and thus the motor is positively cooled by a coolant around the motor. Although each field pole may be constituted by a magnet, a model where the field pole is provided by a coil and the circuit is provided by a low-tension DC circuit requiring low power is employed, so that the field strength of the motor is adjustable to expand an operation range of the motor, through regulating the field current. The synchronous motor may be replaced by an induction motor. It is noted, however, that with a DC machine where the field pole is a stator while the armature is a rotor, it is difficult to positively cool the armature.

Over the motor 1 but under the inverter 2, there is formed a cooling-oil inlet passage 11A. Further, under the motor 1 is disposed a cooling-oil outlet passage 11B. On an outer circumference of the motor 1, a cooling-oil passage is disposed. Cooling oil supplied to the cooling-oil inlet passage 11A by means of an oil pump 5 as described later, cools the inverter 2, and then the motor 1 in the course of flowing through the cooling-oil passage into the cooling-oil outlet passage 11B.

The shaft 1E of the motor 1 is connected to the oil pump 5 and the reduction gear 3. The oil pump 5 is mechanically driven by the motor 1, and an internal gear pump is employed, for instance. The oil pump 5 comprises a first casing 5A, a second casing 5B, and a pinion 5C engaged with an internal gear formed inside the first and second casings 5A, 5B. The pinion 5C is fixed on the shaft 1E.

The oil pump 5 has an inlet port and an outlet port that are not shown. With turning of the shaft 1E, the pinion 5C rotates in meshing engagement with the internal gear so that a volume of a chamber defined between the pinion 5C and the internal gear on the side of the inlet port increases, generating negative pressure there and thereby sucking in lubricating oil. The lubricating oil as sucked in is transferred to the side of the outlet port. There the volume of the chamber formed between the teeth decreases, generating high pressure and thereby discharging the lubricating oil.

The inlet port is connected to a pipe, and the lubricating oil, which is stored in a drain tank disposed under the cases 7, 8, 9, is sucked from the other end of the pipe. The outlet port is connected to a pipe, and the lubricating oil as discharged is transferred in a direction indicated by arrow C1 through the pipe and supplied into the cooling-oil inlet passage 11A to cool the inverter 2. Then, the lubricating oil flows in a direction indicated by arrow C2 to cool an outer circumference of the motor 1, and is discharged in a direction indicated by arrow C3 from a lower portion of the motor 1. Thereafter, the lubricating oil cools the reduction gear 3 and the differential gear 4, and is returned to the drain tank.

When the system is mounted on the vehicle, the drain tank is located at a lower position. Fins are formed on an outer surface of the drain tank, so that the heat of the lubricating oil as stored in the drain tank is conducted through the fins and cooled by the ambient air. The cooling oil as has been cooled is flowed, by means of the oil pump 5, through the passage 11A formed between the inverter 2 and the motor 1, and circulated around the motor. Then the cooling oil lubricates the reduction gear 3, the differential gear 4, etc. The case 7 housing the motor 1 and inverter 2 has cooling fins 7A on its outer surface, so that an enhanced cooling effect can be obtained from the outside of the case by the ambient air.

The reduction gear 3 comprises a planetary gear mechanism 3A and a spur gear mechanism 3B. A clutch 6 is disposed between the planetary gear mechanism 3A and the spur gear mechanism 3B. An output force of the planetary gear mechanism 3A is transmitted to the spur gear mechanism 3B via the clutch 6.

The planetary gear mechanism 3A comprises a sun gear (external gear) 3A1 connected to the shaft 1E, three planet gears 3A2, and a sun gear (internal gear) 3A3. The revolution of the shaft 1E is transmitted to the sun gear (internal gear) 3A3 via the sun gear (external gear) 3A1 and planet gears 3A2.

The clutch 6 is an electromagnetic clutch which is let in and let out by a 4WD control unit to connect and disconnect between the motor and the wheels in order to permit and inhibit transmission of a driving force of the motor to the wheels, as described later.

The spur gear mechanism 3B comprises a first spur gear 3B1, a second spur gear 3B2, and a bevel gear 3B3 coaxial with the second spur gear 3B2. A spur gear 3B1 is fixed on an output shaft of the clutch 6 to transmit a driving force to the differential gear 4 via the spur gears 3B2 and 3B3. The speed reducing ratio of the reduction gear 3 is, for instance, 3 to 4.5.

The differential gear 4 comprises a bevel gear 4B fixed to a differential gear box 4A, bevel pinions 4C, 4D, and bevel gears 4E, 4F. The differential gear 4 is used to cope with a difference between speeds of the inner and outer wheels which occurs when the vehicle turns. The bevel gears 4E, 4F are fixed to a right drive shaft 10R and a left drive shaft 10L, respectively. The revolution or the driving force transmitted from the bevel gear 3B3 of the spur gear mechanism 3B is transmitted in turn to the bevel gear 4B, bevel pinions 4C, 4D, and bevel gears 4E, 4F, to rotate the drive shafts 10R, 10L. To each of the drive shafts 10R, 10L, a wheel is attached.

As described above, the driving force of the motor 1 is transmitted via the reduction gear 3 and differential gear 4 to the wheels to drive the vehicle. In addition, the revolution or driving force of the motor 1 is used for driving the oil pump 5. The reduction gear 3 and the differential gear 4 are respectively partially immersed in the lubricating oil stored in the drain tank, and the lubricating oil is supplied to the reduction gear 3 and the differential gear 4 by the operation of the reduction gear 3 and differential gear 4.

As illustrated above, in the present embodiment, the motor 1, rotational position sensor 1a, inverter 2, reduction gear 3, differential gear 4, oil pump 5, and clutch 6 are integrally assembled in the unified cases 7, 8, 9, making the drive device compact. Although the differential gear 4 may be housed in another case, in view of the requirement for a compact structure, it is preferable that the differential gear 4 is also integrally housed in the unified cases as shown in Fig. 1.

The motor 1, inverter 2, reduction gear 3, differential gear 4, oil pump 5, and clutch 6 are disposed perpendicularly to the drive shafts 10 connected to the wheels. By this perpendicular arrangement, freedom in designing a layout of an exhaust pipe which is connected to the internal combustion engine is enhanced, compared to a case where these components 1 to 6 are disposed parallel to the drive shafts 10. Further, freedom regarding a stroke of a suspension is also increased, widening a range of application of the drive device, from ordinary passenger cars to cross-country vehicles.

In the embodiment, the lubricating oil for the reduction gear 3 and the differential gear 4 is utilized for cooling the inverter 2 and the motor 1. Therefore this drive device is even applicable to a four-wheel drive electric vehicle where the engine and the motor are disposed away from each other, such as the vehicle where cooling water for the internal combustion engine is used for cooling the motor, and enables to efficiently cool the motor and inverter.

By employing the oil pump 5 driven by the motor 1, as means for supplying lubricating oil to the inverter 2 and the motor 1, a special mechanism for supplying the lubricating oil is dispensed with. Thus means for supplying lubricating oil is provided inexpensively.

Since the inverter 2 is housed in the case 7 in the proximity of the motor 1, the wiring between the motor 1 and the inverter 2 can be provided by using the wiring board 2A disposed in the case 7, omitting the necessity of extending the wiring to the outside of the case 7. When the wiring is extended to the outside, a waterproof arrangement using a grommet or others is required. According to the invention, such a waterproof arrangement is not involved, while the work operation of wiring is made easy.

Since the rotational position sensor 1a is also housed in the case 7, wiring between the rotational position sensor 1a and the inverter 2 can be provided by the wiring 2B disposed in the case 7, omitting a waterproof arrangement and making the work operation of wiring easy.

Although in the arrangement described above, the oil pump 5 for circulating the oil around the motor 1, inverter 2, and reduction gear 3 is connected to the shaft of the motor 1, the oil pump 5 may be connected to a shaft of a gear mechanism of the reduction gear 3 having plural steps instead of the shaft of the motor 1. As the oil pump 5, an electric oil pump may be disposed separately from the reduction gear 3 and motor 1. In this case, however, the electric oil pump is disposed on an outer side of the motor 1, inverter 2 and reduction gear 3, increasing the size of the system. Further, a hose for suction and discharge of the oil is also disposed on the outer side, requiring protection against flying gravel or the like. Hence the arrangement where the oil pump is connected to the shaft of the motor 1 or the reduction gear 3 is advantageous in view of size reduction of the system.

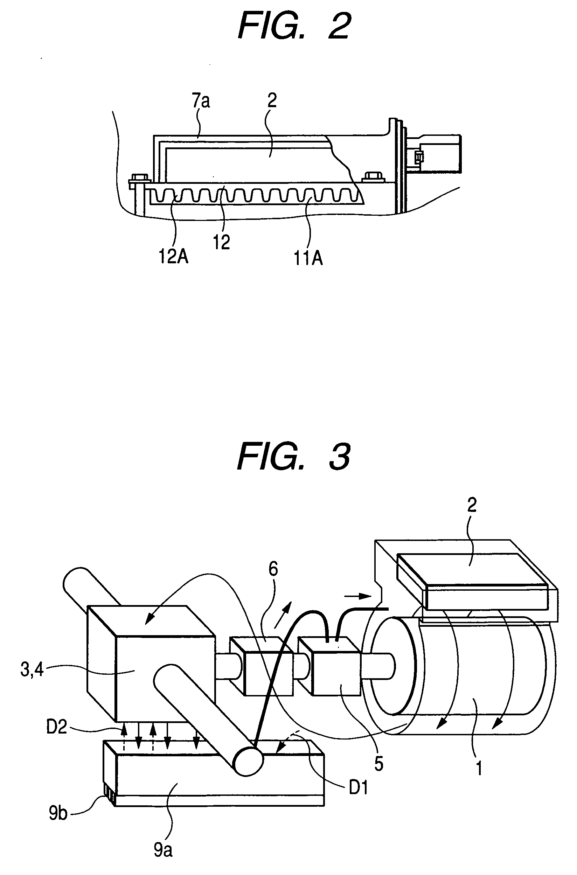

By referring to Fig. 2, a modification of the embodiment shown in Fig. 1 will be described. Fig. 2 is a cross-sectional view of a relevant part of a structure of the modification of the vehicle drive device according to the embodiment of the invention. The same reference numerals as used in Fig. 1 refer to the same parts.

A case 12 of an inverter 2 has fins 12A which are immersed in a cooling-oil inlet passage 11A so that a MOS chip and/or others disposed on a bottom panel of the inverter 2 can be cooled with enhanced efficiency. It may be configured such that an oil passage is defined when the case 7a of the inverter 2 is set in the system.

Circulation of the cooling oil in the vehicle drive device of the embodiment will be described, by referring to Fig. 3.

Fig. 3 shows a structural model showing the circulation of the cooling oil in the vehicle drive device according to the embodiment of the invention.

The oil (cooling oil) cooled down in the drain tank 9a to which fins 9b are attached is sucked by the oil pump 5, and delivered to the lower side of the inverter 2 in which the MOS chip and/or others are disposed on the bottom panel. The oil cools the inverter 2, then flows around the outer circumference of the motor 1, and thereafter circulates to lubricate the clutch 6, reduction gear 3, and differential 4. A part of the reduction gear 3 and the differential 4 is immersed in the drain tank 9a, and an oil passage is configured so that the oil returns to the drain tank after flowing around the outer surface of the motor.

As described above , the oil that has been cooled is initially supplied to the inverter 2. Thus the inverter 2 is efficiently cooled.

It may be arranged such that the cooling oil which has cooled the motor 1 is directly returned to the drain tank 9a as indicated by broken line Dl in the drawing, while the cooling oil is directly supplied to the reduction gear 3 and differential 4 from the drain tank 9a as indicated by a broken line D2.

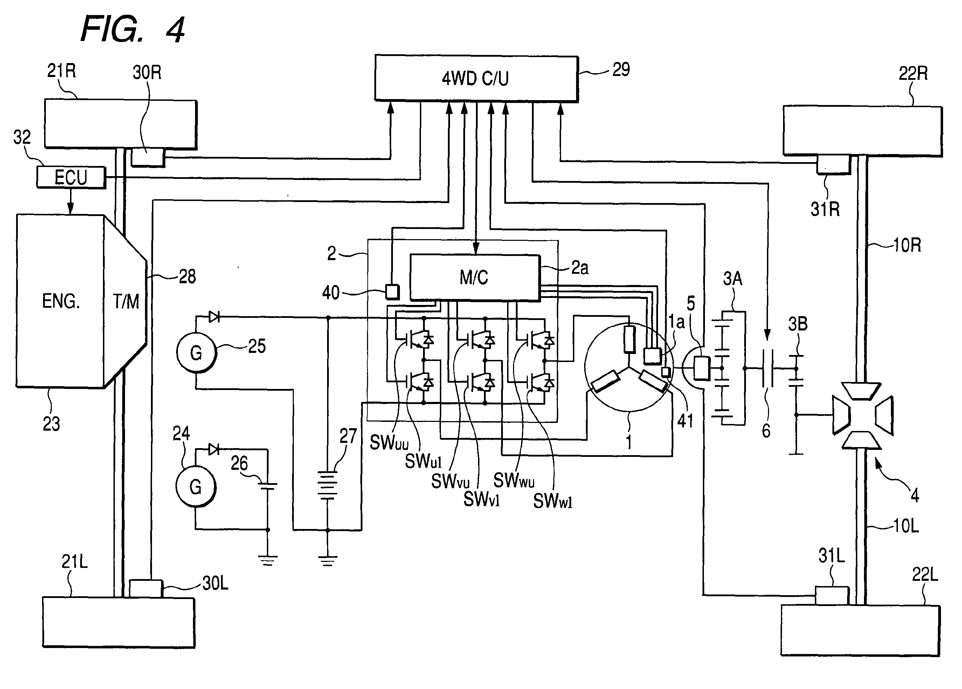

A structure of a four-wheel drive vehicle, where the vehicle drive device according to the embodiment is applied, will be described, by referring to Fig. 4.

Fig. 4 shows a system structure of the four-wheel drive vehicle where the vehicle drive device of the present embodiment is applied. The reference numerals the same as those in Fig. 1 refer to the same parts.

Front wheels 21R, 21L of the four-wheel vehicle are driven by an internal combustion engine 23 via a transmission 28. Rear wheels 22R, 22L are driven by the motor 1 via the reduction gear 3A, 3B and differential gear 4.

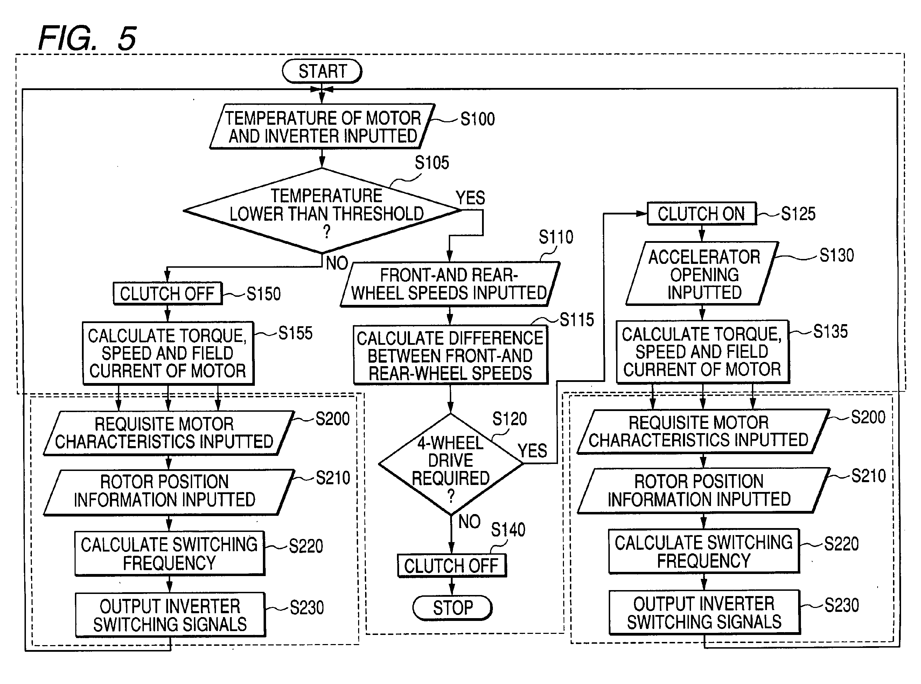

The engine 23 is controlled by an engine control unit (ECU) 32. An output of each of front-wheel speed sensors 30R, 30L respectively disposed on the front wheels 21R, 21L, and an output of each of rear-wheel speed sensors 31R, 31L respectively disposed on the rear wheels 22R, 22L are inputted into a four-wheel drive control unit (4WDC/U) 29. Information of an engine speed Ne and an accelerator opening θth is supplied to the 4WDC/U 29 from the ECU 32. An output from a temperature sensor 40 for sensing a temperature of the inverter 2, and an output from a temperature sensor 41 for sensing a temperature of the motor 1 are inputted into the 4WDC/U 29. Based on the engine speed Ne, the accelerator opening θth, and the outputs from the speed sensors 30, 31 and the temperature sensors 40, 41, the 4WDC/U 29 controls operations of the motor control unit (M/C) 2a and the clutch 6. Details of the controls by the 4WDC/U 29 and M/C 2a will be described referring to Fig. 5.

The inverter 2 includes a semiconductor switching element SWuu of a U-phase upper arm, a semiconductor switching element SWul of a U-phase lower arm, a semiconductor switching element SWvu of a V-phase upper arm, a semiconductor switching element SWvl of a V-phase lower arm, a semiconductor switching element SWwu of a W-phase upper arm, and a semiconductor switching element SWwl of a W-phase lower arm. As the semiconductor switching elements, MOSFET may be employed, for instance.

The M/C 2a controls switching operations of the semiconductor switching elements SW, based on command values (e.g., a motor torque and a motor speed) from the 4WDC/U 29. As illustrated with reference to Fig. 1, the M/C 2a is integrally housed in the case for the inverter 2.

In an engine room of the vehicle, a generator 24 for car accessories and a generator 25 for driving the motor are disposed, and they respectively operate as a charging and generating system. The generators 24, 25 are respectively belt-driven by the engine 23. Outputs of the generators 24, 25 are charged in a battery 26 for the car accessories and a battery 27 for the motor drive, respectively. Although an example where the batteries 26, 27 are separately provided to drive the accessories and the motor, respectively, is described, a battery commonly used for driving the accessories and the motor may be provided, by using a booster or a transformer. Also, a single common generator may be provided instead of the generators 24, 25 respectively for the accessories and the motor. Alternatively, it may be arranged such that electric power obtained by a high-power generator is directly outputted to the inverter 2.

The motor 1 is connected to the drive shafts 10R, 10L of the rear wheels 22, via the reduction gear 3A, 3B, clutch 6, and differential gear 4. When the clutch 6 is let in, an output shaft of the motor 1 is connected to the reduction gear 3A, 3B via the clutch 6. When the clutch 6 is let out, the motor 1 is disconnected from the rear wheels 22. For instance, when the vehicle speed reaches 40 km/h, the 4WDC/U 29 lets out the clutch 6, placing the drive device of the vehicle in a state where only the front wheels 21 are driven. According to this arrangement, the fuel efficiency is improved compared to a system where the motor is kept operated over the entire speed range.

When the temperatures of the motor 1 and inverter 2 are high while the vehicle is running, the 4WDC/U 29 lets out the clutch 6, making the motor 1 rotate under a light load for driving only the oil pump 5, so that the motor 1 and inverter 2 are cooled by operation of the oil pump 5 even when the vehicle is not in a four-wheel drive mode.

Further, braking forces, namely, regenerative braking and dynamic braking, can be obtained by utilizing the motor 1 as a generator during the vehicle is running at high speed or downhill or in like situations, forming a rectifier circuit for power generation in the inverter 2, and further disposing equipment to be charged with the power generated by the motor 1 or to consume that power, in the vehicle.

There will be now described an operation of the vehicle drive device of the present embodiment, by referring to Fig. 5.

Fig. 5 shows a flowchart illustrating the details of the control performed in the vehicle drive device according to the embodiment of the invention. The flowchart of Fig. 5 shows the details of the controls by the 4WDC/U 29 and the M/C 2a which are shown in Fig. 4. Steps S100 to S155 are implemented in the control by the 4WDC/U 29, while steps S200 to S230 are implemented in the control by the M/C 2a. It is noted that wheels driven by the power transmitted from the engine 23 via the transmission 28 are the front wheels 21, while wheels driven by the motor 1 are rear wheels 22.

In step S100, the four-wheel drive control unit (4WDC/U) 29 receives a temperature signal from each of the temperature sensor 41 of the motor 1 and the temperature sensor 40 of the inverter 2.

Then, in step S105, the 4WDC/U 29 determines whether or not the temperatures are respectively lower than predetermined thresholds. When the temperatures are lower than the thresholds, the control flow proceeds to step S110. On the other hand, when the temperatures are higher than the thresholds, the control flow proceeds to step S150.

When the temperatures are lower than the thresholds, in step S110, the 4WDC/U 29 receives the outputs from the front- and rear-wheel speed sensors 30R, 30L, 31R, 31L, and performs processing such as selecting the lower one of the front- and rear-wheel speeds as a vehicle speed.

In next step S115, the 4WDC/U 29 calculates a difference between the speeds of the front wheels 21R, 21L, and the rear wheels 22R, 22L.

Then, in step S125, the 4WDC/U 29 determines whether a four-wheel drive operation is required, based on the vehicle speed and the difference between the speeds of the front and rear wheels 21, 22 obtained in steps S110 and S115 . For instance, when it is determined that the vehicle speed is equal to or lower than 40 km/h and the difference between the speeds of the front and rear wheels 21, 22 is equal to or higher than a predetermined threshold (i.e., the vehicle is in a slipping state), the 4WDC/U 29 determines that the four-wheel drive operation is required. In a case where the four-wheel drive operation is required, the control flow proceeds to step S125. Where the four-wheel drive operation is not required, the control flow goes to step S140 in which the rear wheels 22 are disconnected from the motor 1 at the clutch 6, to stop the operation of the system.

Where the four-wheel drive operation is required, the 4WDC/U 29 outputs an ON signal for the clutch 6, in step S125.

Then, in step S130, the 4WDC/U 29 receives the accelerator opening θth.

Then, in step S135, the 4WDC/U 29 calculates a motor speed corresponding to the accelerator opening θth, and calculates a drive torque based on the motor speed and the difference between the speeds of the front and rear wheels 21, 22. In a case where a field control of the motor 1 is possible, an amount of field current is also calculated. The calculated motor torque, motor speed, and when needed, amount of field current, are outputted to the motor controller (M/C) 2a.

Then, the motor controller (M/C) 2a receives in steps S200 requisite motor characteristics such as the target motor speed and target motor torque calculated by the four-wheel drive control unit (4WDC/U) 29.

Then, in step S210, the M/C 2a receives a position signal from the rotational position sensor 1a of the motor 1.

Then, in step S220, the M/C 2a calculates a switching frequency of the inverter 2, based on the target motor speed and the target motor torque calculated by the four-wheel drive control unit (4WDC/U) 29 and the position signal from the rotational position sensor 1a of the motor 1.

Then, in step S230, the M/C 2a outputs a switching signal to the inverter 2 based on the switching frequency calculated in step S220. Thus an appropriate input voltage and current are applied to the motor 1, and an actual torque and speed are given to the rear wheels from motor 1.

As the result of the determination made in step S105, when the temperatures of the motor 1 and inverter 2 are higher than the thresholds, the control flow goes to step S150. In step S150, the 4WDC/U 29 lets out(turn off) the clutch 6, and operates the motor 1 under a light load of operating only the oil pump 5, so as to cool the motor 1 and the inverter 2.

Then, in step S155, the 4WDC/U 29 lowers the target motor torque to decrease the load on the motor 1 and inverter 2, and calculates the motor speed, and the amount of field current also, when needed. The calculated motor torque, motor speed, and the amount of field current when needed, are outputted to the motor controller (M/C) 2a. The processing by the M/C 2a (steps S200 to S230) has been described above. It is possible to adapt the control such that the system is turned off when the temperatures of the motor 1 and the inverter 2 further rise.

It is not limited to when the vehicle is slipping that a decision that the four-wheel drive operation is required is made. For instance, when the engine is not operated but it is desired to quickly start the vehicle, such as when the vehicle is in an idle stop mode, the four-wheel drive operation may be performed.

As described above, according to the present embodiment, the motor and the inverter are efficiently cooled, while lowering the cost of the vehicle drive device. That is, by integrating the motor, inverter, and gear mechanism, the oil circulation mechanism which is essential for the gear mechanism, can be utilized to cool the motor and inverter, thereby reducing the size and cost of the system.

By integrating the motor, inverter, and electromagnetic clutch, all the wiring can be concentrated at a location, simplifying the wiring in the vehicle.

Further, provision of the clutch enables to cool the motor and inverter through lubrication with oil, independently of the driving of the wheels.

When the vehicle does not require the driving force from the motor, power supply to the motor is cut off and the motor is disconnected from the power line so that the motor is prevented from acting as a drag load.

## Claims

1. A vehicle drive device comprising:
a motor (1) for driving wheels (22R, 22L) of the vehicle;
an inverter (2) for driving the motor (1);
a rotational position sensor (1a) for detecting a rotational position of the motor (1);
a gear mechanism (3) for transmitting power from the motor (1) to the wheels (20R, 20L);
oil circulation means (5) which is driven by the motor (1) to circulate oil; and
cases (7, 8, 9) which house respectively the motor (1), the inverter (2), the rotational position sensor (1a), the gear mechanism (3), and the oil circulation means (5),
wherein the motor (1), the inverter (2), the rotational position sensor (1a), the gear mechanism (3), the oil circulation means (5), and the cases (7, 8, 9) for them are combined into an assembly.

2. The vehicle drive device according to claim 1, **characterized in that** the lubricating oil for the gear mechanism (3) is also supplied to the interior of the case (7) for the motor (1) and the inverter (2) by the oil circulation means (5) so as to cool the inverter (2) and the motor (1) as well as the gear mechanism (3).

3. The vehicle drive device according to claim 1 or 2, **characterized in that** the oil circulation means (5) operates to cool the motor (1) and the inverter (2) at the same time, and then cool the gear mechanism (3) and a differential gear mechanism (4) which are disposed downstream of the motor (1) and the inverter (2).

4. The vehicle drive device according to at least one of claims 1 to 3, **characterized in that** a differential gear (4), which is used to cope with a speed difference between an inner wheel and an outer wheel which occurs when the vehicle turns, is also integrated with the cases (7, 8, 9).

5. The vehicle drive device according to at least one of claims 1 to 4, **characterized in that** a clutch is disposed between the motor (1) and the wheels (22R, 22L) driven by the motor (1), and is let in and let out to permit and inhibit transmission of power from the motor (1) to the wheels (22R, 22L).

6. The vehicle drive device according to at least one of claims 1 to 5, **characterized in that** an inverter drive circuit is incorporated in the inverter (2).

7. The vehicle drive device according to at least one of claims 1 to 6, **characterized in that** the cases (7, 8, 9) which house respectively the motor (1), the inverter (2), and the rotational position sensor (1a) are combined into a unified case.

8. A four-wheel drive vehicle having an internal combustion engine (23) for driving one of front wheels and rear wheels, and a motor for driving the other of the front wheels (21R, 21L) and the rear wheels (22R, 22L), the vehicle comprising:
an inverter (2) for driving the motor (1);
a rotational position sensor (1a) for detecting a rotational position of the motor (1);
a gear mechanism (3) for transmitting power from the motor (1) to the wheels (22R, 22L);
oil circulation means (5) which is driven by the motor (1) to circulate oil; and
cases (7, 8, 9) which house respectively the motor (1), the inverter (2), the rotational position sensor (1a), the gear mechanism (3), the oil circulation means (5), and the oil,
wherein the motor (1), the inverter (2), the rotational position sensor (1a), the gear mechanism (3), the oil circulation means (5), and the case (7, 8, 9) for them are combined into an assembly.

9. An electrical machine system integrally mounted on a unit having a differential gear mechanism (4) for transmitting a driving force to a drive axle of wheels (22R, 22L) and a reduction gear mechanism (3) for transmitting the driving force to the differential gear mechanism (4), and a lubricant is circulated into the differential gear mechanism (4) and the reduction gear mechanism (3), the electrical machine system comprising:
a motor (1) for generating the driving force transmitted to the reduction gear mechanism (3); and
a power converter for controlling electric power supplied to the motor (1) to control the motor driving force,
wherein a cooling passage (11) through which a coolant is circulated is formed in a motor case and a power converter case (7),
the lubricant circulated to the differential gear mechanism (4) and the reduction gear mechanism (3) is supplied to the cooling passage as a coolant, and
the motor (1) and the power converter are cooled by the lubricant circulated through the cooling passage (11).

10. The electrical machine system according to claim 9, **characterized in that** the cooling passage (11) in the motor case and the converter case (7) is positioned upstream of the differential gear mechanism (4) and the reduction gear mechanism (3) with respect to the lubricant flow.

11. The electrical machine system according to claim 9 or 10, **characterized in that** the cooling passage (11) is supplied with the lubricant from a lubricant circulation means driven by the motor (1).

12. An electrical machine system for a four-wheel drive vehicle, which is mounted on a four-wheel drive vehicle where an internal combustion engine (23) drives one of a front wheel drive axle and a rear wheel drive axle (10), and electric power drives the other of the drive axles, furthermore the electrical machine system is integrally mounted on a unit having a differential gear mechanism (4) for transmitting a driving force to the other of the drive axles and a reduction gear mechanism (3) for transmitting the driving force to the differential gear mechanism (4) while reducing its speed, and a lubricant is circulated into the differential gear mechanism (4) and the reduction gear mechanism (3), the electrical machine system comprising:
a motor (1) for generating the driving force transmitted to the reduction gear mechanism (3); and
a power converter for controlling electric power supplied to the motor (1) to control the motor driving force,
wherein a cooling passage (11) through which a coolant is circulated is formed in a motor case and a power converter case (7),
the lubricant circulated to the differential gear mechanism (4) and the reduction gear mechanism (3) is supplied to the cooling passage (11) as a coolant, and
the motor (1) and the power converter (2) are cooled by the lubricant circulated through the cooling passage (11).

13. The electrical machine system for a four-wheel drive vehicle according to claim 12, **characterized in that** the cooling passage (11) in the motor case and the converter case (7) is positioned upstream of the differential gear mechanism (4) and the reduction gear mechanism (3) with respect to the lubricant flow.

14. The electrical machine system for a four-wheel drive vehicle according to claim 12 or 13, **characterized in that** the cooling passage (11) is supplied with the lubricant from a circulation means (5) driven by the motor (1).

15. The electrical machine system for a four-wheel drive vehicle according to at least one of claims 12 to 14, **characterized by** further comprising a generator (25) driven by the internal combustion engine (23), wherein the generator (25) is for exclusively generating power for driving the motor (1), and electrically connected to an input of the power converter.

16. An electrical machine system for a four-wheel drive vehicle, which is mounted on a four-wheel drive vehicle where an internal combustion engine (23) drives one of a front wheel drive axle and a rear wheel drive axle (10), and electric power drives the other of the drive axles , furthermore the electrical machine system being **characterized by** comprising:
a differential gear mechanism (4) for transmitting a driving force to the other of the drive axles;
a reduction gear mechanism (3) for transmitting the driving force to the differential gear mechanism (4) while reducing its speed;
a motor (1) for generating the driving force transmitted to the reduction gear mechanism; and
a power converter (2) for controlling electric power supplied to the motor to control the motor driving force,
wherein the differential gear mechanism (4), the reduction gear mechanism (3), the motor (1), and the power converter are combined to be a single unit in a unified case,
a lubricant is circulated to the differential mechanism (4) and the reduction gear mechanism (3),
a cooling passage (11) through which a coolant is circulated is formed in a motor case and a power converter case (7),
the lubricant circulated to the differential gear mechanism (4) and the reduction gear mechanism (3) is supplied to the cooling passage (11) as a coolant, and
the motor (1) and the power converter are cooled by the lubricant circulated through the cooling passage (11).

17. The electrical machine system for a four-wheel drive vehicle according to claim 16, **characterized in that** the cooling passage (11) is supplied with the lubricant before the lubricant is circulated to the differential gear mechanism (4) and the reduction gear mechanism (3).

18. The electrical machine system for a four-wheel drive vehicle according to claim 16 or 17, **characterized in that**:
the unit includes a circulation means (5) for circulating the lubricant by a driving force of the motor (1),
and the cooling passage (11) is supplied with the lubricant from the circulation means (5).

19. The electrical machine system for a four-wheel drive vehicle according to at least one of claims 16 to 18, **characterized in that**:
the cooling passage (11) is formed in the case, which constitutes a motor casing and a power converter casing (7),
and the motor (1) and the power converter are disposed side by side putting the cooling passage (11) between them so as to share the cooling passage (11).

20. The electrical machine system for a four-wheel drive vehicle according to at least one of claims 16 to 18, **characterized by** further comprising a generator driven by the internal combustion engine, wherein the generator (25) is for exclusively generating power for driving the motor (1), and electrically connected to an input of the power converter.
